# EUROPÄISCHE PATENTSCHRIFT

(11) **EP 2 118 018 B1**
(45) Veröffentlichungstag und Bekanntmachung des Hinweises auf die Patenterteilung: **26.06.2019**
(21) Anmeldenummer: 08708317.6
(22) Anmeldetag: 29.01.2008
(51) Int. Cl.: C01G 41/00

(54) **VERFAHREN ZUR HERSTELLUNG VON AMMONIUMPARAWOLFRAMATTETRAHYDRAT UND HOCH REINES AMMONIUMPARAWOLFRAMATTETRAHYDRAT**
METHOD FOR PRODUCTION OF AMMONIUM PARATUNGSTATE TETRAHYDRATE AND HIGHLY PURE AMMONIUM PARATUNGSTATE TETRAHYDRATE
PROCÉDÉ DE FABRICATION DE TÉTRAHYDRATE DE PARATUNGSTÉNATE D'AMMONIUM ET TÉTRAHYDRATE DE PARATUNGSTÉNATE D'AMMONIUM TRÈS PUR

(30) Priorität: 02.02.2007 DE 102007005287
(43) Veröffentlichungstag der Anmeldung: 18.11.2009
(73) Patentinhaber: H.C. Starck Tungsten GmbH, 80339 München (DE)
(72) Erfinder: STOLLER, Viktor, 38667 Bad Harzburg (DE); ERB, Michael, 38259 Salzgitter (DE); MEESE-MARKTSCHEFFEL, Juliane, 38642 Goslar (DE); LOHSE, Michael, 38640 Goslar (DE); MATHY, Wolfgang, 38685 Langelsheim (DE)
(74) Vertreter: dompatent von Kreisler Selting Werner - Partnerschaft von Patent- und Rechtsanwälten mbB
(86) Internationale Anmeldenummer: PCT/EP2008/051000
(87) Internationale Veröffentlichungsnummer: WO 2008/092838

(56) Entgegenhaltungen:
- US-A- 4 092 400
- HEMPEL ET AL.: "Löslichkeit und stabile Kristallhydrate im System Ammoniumparawolframat-Wasser" KRISTALL UND TECHNIK, Bd. 2, Nr. 3, 1967, Seiten 437-445, XP002483348
- KIRILENKO ET AL.: "In situ XAS and XRD studies on the structural evolution of ammonium paratungstate during thermal decomposition" EUR. J.INORG. CHEM., 2005, Seiten 2124-2133, XP002483349
- FRENCH ET AL.: "A re-investigation of the thermal decomposition of ammonium paratungstate" J. MATER. SC., Bd. 16, 1981, Seiten 3427-3436, XP002483350
- A.K. BASU AND F.R. SALE: "Characterization of various commercial forms of ammonium paratungstate powder" J. MATER. SC., Bd. 10, 1975, Seiten 571-577, XP002483351
- PUT VAN J W ET AL: "FORMATION OF AMMONIUM PARATUNGSTATE TETRA- AND HEXA-HYDRATE. I: ÖSTABILITY" HYDROMETALLURGY, ELSEVIER SCIENTIFIC PUBLISHING CY. AMSTERDAM, NL, Bd. 34, Nr. 2, 1. November 1993 (1993-11-01), Seiten 187-201, XP000430399 ISSN: 0304-386X
- YUNJIAO ET AL.: "Preparation of ammonium paratungstate with coarse grain by evaporating crystallization" J. CENT. SOUTH UIV. TECHNOL., Bd. 4, Nr. 1, 1. März 1997 (1997-03-01), Seiten 32-35, XP002483352

## Beschreibung

Die vorliegende Erfindung betrifft ein Verfahren zur Herstellung von hochreinem Ammoniumparawolframattetrahydrat.

Ammoniumparawolframathydrate (nachstehend APW genannt) sind bekannte Zwischenprodukte für die Herstellung von Wolframmetall, von Wolfram enthaltenden Katalysatoren oder von Hartstoffen auf Wolframbasis, beispielsweise von Wolframkarbiden, oder Sputtertargets. Für die zuletzt genannte Anwendung ist ein besonders hoher Reinheitsgrad des APW's erforderlich.

Die Herstellung von hoch reinem APW erfolgt grundsätzlich über den Säure- bzw. Laugen- bzw. Schmelzaufschluß von Wolfram-haltigen Konzentraten bzw. Wolframschrotten mit angeschlossenen Reinigungsstufen über Fällprozesse und Flüssig-Flüssig-Extraktion. Die gereinigte Lösung wird in der Regel durch Verdampfung aufkonzentriert, wobei schließlich APW auskristallisiert.

Nach dem Stand der Technik werden Wolframerzkonzentrate (z.B. Scheelit, Wolframit) sowie W-haltige Schrotte mit Soda und/oder Natronlauge aufgeschlossen. Die entstehende Na-Wolframatlösung wird über mehrere Stufen mittels Fäll- bzw. Ionenaustauschprozess von Si, P, F, Mo, As, Sb, Bi, Co etc. vorgereinigt. Anschließend wird über eine Flüssig-Flüssigextraktion unter Verwendung von aminhaltigen organischen Phasen die Natriumwolframat- in Ammoniumwolframatlösung konvertiert. Aus dieser Lösung wird APW über eine Verdampfungskristallisation hergestellt.

Alternativ wird z. B. großtechnisch in China oder Usbekistan der Reinigungs- und Konvertierungsprozeß der Aufschlußlösungen mittels Ionenaustauscherharzen durchgeführt. Hier werden Wolfram und Molybdän von einem Tauscher aufgenommen, wohingegen Verunreinigungen, wie Si, P und As, im Raffinat verbleiben. Anschließend wird über eine selektive Elution Wolfram von Molybdän getrennt. Aus dem Wolfram-haltigen Eluat wird APW ebenfalls über eine Verdampfungskristallisation hergestellt. Typische Verunreinigungsgehalte von auf diese Weise hergestellten APW-Produkten sind in der im Beispielteil stehenden Tabelle 2 zusammengestellt.

Auf diesen Wegen hergestellte Produkte weisen typischerweise einen Reinheitsgrad von 99,9 bis 99,99 Gew. % auf (3-4N).

Detaillierte Beschreibungen vorbekannter Verfahren zur Herstellung von APW sind in den Patentdokumenten DE-AS-1,244,141, DE-A-196 28 816, DE-C-197 24 183 und US-A-4,115,513, sowie in den Veröffentlichungen "Anionexchange method for preparation of ammonium paratungstate from soda solutions, Kholmogorov, Vaneeva,Yurkevich, Tsvetnye Metally (Moscow, Russian Federation) 7/1978, S. 59-62", "Use of extraction by amines during the preparation of ammonium paratungstate, Petrov, Maslenitskii, Davydova, Tsvetnye Metally (Moscow, Russian Federation) 3/1974, S. 38-39", "New process for production of high purity ammonium paratungstate from tungsten siimes with high content of impurities, Zhang, Gong, Huang, Huang, Zhongnan Kuangye Xueyuan Xuebao (1990), 21 (4), 389-96", "Preparation of Ammonium Paratungstate from a Sodium Tungstate-Sodium Chloride Phase, Raddatz, Gomes, Carnahan, Rep. Invest. US, Bur. Mines (1988), RI 9165" sowie in dem Buch "TUNGSTEN Properties Chemistry, Technology of the Element, Alloys, and Chemical Compounds (ISBN 0-306-45053-4, 1999), Lassner, Schubert, S. 184-212 beschrieben.

In typischen Verfahren des Standes der Technik wird W-Konzentrat mit Natronlauge bzw. Soda aufgeschlossen und die entstehende Lauge wird unter Zusatz von Mg-, Al-Salzen und Natriumhydrogensulfid von Verunreinigungen, wie P, As, Si, V und Mo, vorgereinigt. Anschließend wird die Natriumwolframatlösung über eine Flüssig-Flüssig Extraktion unter Verwendung einer organischen Phase (z.B. enthaltend 7-10 Gew.% Diisotridecylamin, 10 Gew.% Isodecanol, Rest: Testbenzin) gereinigt und in Ammoniumwolframatlösung konvertiert. Diese Lösung wird fraktioniert eingedampft und das entstehende APW abgetrennt, gewaschen und getrocknet. Typische Verunreinigungsgehalte eines auf diese Weise hergestellten APW-Produktes sind in der im Beispielteil stehenden Tabelle 1 zusammengestellt.

Hempel et al beschreiben Untersuchungen der Löslichkeit und stabiler Kristallhydrate im System Ammoniumparawolframat-Wasser (K. Hempel, M. Sarashadow, "Löslichkeit und stabile Kristallhydrate im System Ammoniumparaolframat-Wasser; Kristalle und Technik, 2, 3, 1967, 437-445). Die untersuchten Parawolframate werden durch Eindampfen von Ammoniumwolframat-Lösungen bei verschiedenen Temperaturen hergestellt. Ein großer Nachteil der vorbekannten Verfahren besteht darin, daß der Reinheitsgrad der damit herstellbaren Produkte für spezielle Anwendungen, wie z. B. für Sputtertargets, nicht ausreicht. Außerdem liegen die APW-Fertigungskosten aufgrund des hohen Energieverbrauches der Verdampfungskristallisation sehr hoch.

Ausgehend von diesem Stand der Technik ist es Aufgabe der vorliegenden Erfindung, ein wirtschaftliches Verfahren zur Verfügung zu stellen, welches es erlaubt, in einem einfachen Verfahren ein hoch reines Ammoniumparawolframtetrahydrat mit hoher Produktausbeute herzustellen.

Die Erfindung beruht auf der überraschenden Erkenntnis, dass sich Ammoniumparawolframatdekahydrat ("APW-Dekahydrat") in wässeriger Suspension durch Erhitzen des suspendierten APW-Dekahydrats quantitativ in hoch reines Ammoniumparawolframattetrahydrat ("APW-Tetrahydrat") umwandelt. Als bevorzugte Prozeßparameter sind das Massenverhältnis von APW-Dekahydrat zur wässerigen Lösung, die NH₃-Konzentration der resultierenden wässerigen Lösung, das NH₃ : W-Stoffmengenverhältnis der resultierenden wässerigen Lösung sowie die Temperatur der thermischen Behandlung zu nennen.

Die vorliegende Erfindung betrifft ein Verfahren zur Herstellung von Ammoniumparawolframattetrahydrat mit einem Reinheitsgrad von mindestens 99,999% durch Überführen von in wässeriger Phase suspendiertem Ammoniumparawolframatdekahydrat durch Erhitzen in Ammoniumparawolframattetrahydrat durch Erhitzen auf eine Temperatur von 85°C bis 95°C..

Als Ausgangsmaterial für das erfindungsgemäße Verfahren kann auf beliebige Weise hergestelltes APW-Dekahydrat eingesetzt werden.

In der prioritätsgleichen Patentanmeldung mit dem internen Aktenzeichen STA 066009 wird ein Verfahren zur Herstellung von grobkristallinem APW-Dekahydrat beschrieben. Nach diesem Verfahren wird APW durch Reextraktion einer Wolfram beladenen organischen Phase mit Ammoniak enthaltender wässeriger Lösung hergestellt. Durch Auswahl geeigneter Verfahrensparameter ist es möglich, ein grobkristallines APW direkt beim Reextraktionsschritt herzustellen. Dieses lässt sich in hoher Reinheit und mit großer Ausbeute kristallisieren. Das Herstellungsverfahren ist darüber hinaus einfach und energieschonend durchzuführen. Unter Ammoniumparawolframathydrat im Sinne der Beschreibung dieser prioritätsgleichen Patentanmeldung sind das Tetrahydrat, also (NH₄)₁₀[H₂W₁₂O₄₂] x 4(H₂O), und das Dekahydrat, also (NH₄)₁₀[H₂W₁₂O₄₂] x 10(H₂O), zu verstehen. Die Bildung dieser Hydrate erfolgt in Abhängigkeit von den Temperaturen bei der Reextraktion. Die mit dem Verfahren aus der prioritätsgleichen Patentanmeldung erhältlichen Produkte weisen einen vergleichsweise hohen Reinheitsgrad, z.B. von >4N, auf. Die Ausbeute des Kristallisationsschrittes liegt, bezogen auf den W-Gehalt der beladenen organischen Phase, bei >96%. Für spezielle Anwendungen reicht auch dieser Reinheitsgrad allerdings noch nicht aus.

Im Verfahren der vorliegenden Erfindung wird als APW-Dekahydrat bevorzugt das gemäß dem in der prioritätsgleichen Anmeldung STA 066009 beschriebenen Verfahren hergestellte Produkt eingesetzt.

Dabei handelt es sich um ein Ammoniumparawolframatdekahydrat, das direkt durch Reextraktion einer mit Wolfram beladenen organischen Phase mit einer Ammoniak enthaltenden wässerigen Lösung in einer Mixer-Settler Vorrichtung hergestellt worden ist, wobei die Reextraktion bei einem NH₃ : W-Stoffmengenverhältnis von 0,83 bis 1,30, bevorzugt 0,85 bis 0,95, und bei einem Volumendosierverhältnis der mit Wolfram beladenen organischen Phase zur Ammoniak enthaltenden wässerigen Lösung von 5 bis 25, bevorzugt 10 bis 15, durchgeführt wurde.

Bevorzugt wird ein nach diesem Verfahren hergestelltes Ammoniumparawolframatdekahydrat, bei dessen Herstellung die Reextraktion im Mixer so durchgeführt wird, dass sich eine Feststoffkonzentration des Ammoniumparawolframathydrats, bezogen auf die Ammoniak enthaltende wässerige Phase im Mixer, von 100 bis 1200 g/l, besonders bevorzugt 500 bis 800 g/l, einstellt.

Ebenfalls besonders bevorzugt wird ein nach diesem Verfahren hergestelltes Ammoniumparawolframatdekahydrat, bei dessen Herstellung im Mixer die Rührgeschwindigkeit so eingestellt wird, dass eine nicht homogene Verteilung von organischer Phase und Ammoniak enthaltender wässeriger Phase im Mixer erreicht wird.

In einer weiteren besonders bevorzugten Ausführungsform wird ein nach diesem Verfahren hergestelltes Ammoniumparawolframatdekahydrat eingesetzt, bei dessen Herstellung das Auftrennen des Phasengemisches in einem mit Rührvorrichtung ausgestattetem Settler unter Rühren erfolgt, wobei die Drehzahl der Rührvorrichtung so eingestellt wird, dass bei der Sedimentation des Ammoniumparawolframathydrats mitgeschleppte organische Phase abgetrennt wird, wobei das Phasengemisch aus dem Mixer vorzugsweise in den Phasengrenzbereich zwischen organischer Phase und Ammoniak enthaltender wässeriger Phase des Settlers eingeleitet wird.

In einer weiteren besonders bevorzugten Ausführungsform wird ein Ammoniumparawolframatdekahydrat eingesetzt, das zu mindestens 75 % aus Kristallen mit einer Länge von mindestens 200 µm besteht, die ein Verhältnis von Länge zu Breite von kleiner als 4,5 : 1 aufweisen, bevorzugt ein Produkt, das eine Schüttdichte von mindestens 1,7 g/cm³, vorzugsweise 1,8 bis 2,2 g/cm³, aufweist.

Insbesondere wird als suspendiertes Ammoniumparawolframatdekahydrat ein Produkt eingesetzt, das zu mindestens 75 % aus Kristallen mit einer Länge von 200 bis 1000 µm, vorzugsweise 300 bis 400 µm, besteht, die ein Verhältnis von Länge zu Breite von 3,0 : 1 bis 3,5 : 1 aufweisen.

In einer weiteren bevorzugten Ausführungsform des erfindungsgemäßen Verfahrens wird als wässerige Phase oder als Bestandteil der wässerigen Phase zur Suspendierung des Ammoniumparawolframatdekahydrates Ammoniak- und Wolfram-haltige Lösung und/oder entionisiertes Wasser eingesetzt, vorzugsweise die Mutterlauge und/oder das Waschwasser aus der Herstellung des Ammoniumparawolframattetrahydrates und/oder die Mutterlauge und/oder das Waschwasser aus der Herstellung des Ammoniumparawolframatdekahydrates ganz besonders bevorzugt die Mutterlauge und/oder das Waschwasser aus der Herstellung des Ammoniumparawolframatdekahydrates aus dem in der prioritätsgleichen Patentanmeldung STA 066009 beschriebenen Verfahren .

Die NH₃-Konzentration der Mutterlauge der Herstellung des Ammoniumparawolframattetrahydrates wird vorzugsweise zwischen 1,5 bis 12 g/l NH₃, besonders bevorzugt 2,0 bis 4,0 g/l NH₃, eingestellt.

Das NH₃ : W-Stoffmengenverhältnis in der Mutterlauge der Herstellung des Ammoniumparawolframattetrahydrates wird vorzugsweise zwischen 0,5 bis 1,8, besonders bevorzugt zwischen 0,6 bis 1,0, eingestellt.

NH₃-Konzentrationen und NH₃ : W-Stoffmengenverhältnisse außerhalb der angegebenen Bereiche führen zum Einbau von Verunreinigungen in das Produkt.

Außerdem weist das differenzkalorimetrische Spektrum (DSC-Spektrum) des erhaltenen Produktes bei NH₃-Konzentrationen von über 12 g/l im Temperaturbereich zwischen 280-340°C einen endothermen Peak auf.

Das Massenverhältnis von APW-Dekahydrat zu wässeriger Phase wird bevorzugt zwischen 0,2:1 bis 2,5:1, besonders bevorzugt zwischen 1:1 bis 1,8:1, eingestellt.

Bei Massenverhältnissen unterhalb des angegebenen Bereiches entstehen Ablagerungen an den Reaktorwandungen. Ein Massenverhältnis oberhalb des angegebenen Bereiches führt zur Verschlechterung der Produktreinheit.

Die thermische Behandlung der wässerigen Suspension des APW-Dekahydrates erfolgt bei Temperaturen von 85 - 95°C und bei Zeitdauern die ausreichend sind, um das APW-Dekahydrat in APW-Tetrahydrat zu überführen.

Bei Temperaturen unterhalb von 65°C entsteht kein reinphasiges APW-Tetrahydrat. Die höchste Produktreinheit wird in dem bevorzugtem Temperaturintervall erreicht.

Die Dauer der thermischen Behandlung muss ausreichend sein, um bei der gewählten Temperatur das APW-Dekahydrat vollständig in das APW-Tetrahydrat zu überführen. Typische Behandlungsdauern liegen im Bereich von 0,1 bis 6 Stunden.

Das mit dem erfindungsgemäßen Verfarhen hergestellte Ammoniumparawolframattetrahydrat hat einen Reinheitsgrad von mindestens 99,999%, insbesondere einen Reinheitsgrad von mindestens 99,9997%, bezogen auf die Gesamtmasse des Produkts, aufweist. Produkte mit diesen Reinheitsgraden sind bislang nicht beschrieben worden.

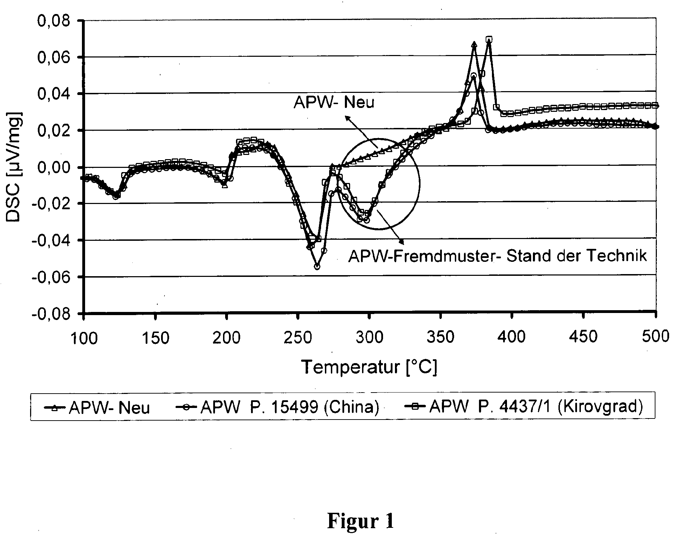

Die Ammoniumparawolframattetrahydrate gemäß des erfindungsgemäßen Verfahrens unterscheiden sich vom Stand der Technik auch darin, dass bei der differenzkalorimetrischen Analyse (DSC-Analyse; Aufheizrate: 10 K/min) kein endothermer Reaktionsverlauf im Temperaturbereich zwischen 280 und 340°C auftritt. Die differenzkalorimetrische Charakterisierung des neuen APW-Tetrahydrates im Vergleich zu Produkten des Standes der Technik ist in Figur 1 dargestellt.

In den nachstehenden Ausführungsbeispielen und Figuren wird die Erfindung beschrieben. Eine Begrenzung auf diese Beispiele und Figuren ist dadurch nicht beabsichtigt.

### Ausführungsbeispiel 1:

In einen beheizbaren 200-Liter Rührreaktor wurden 100 Liter Ammonium- und Wolfram-haltige Lösung mit 3,5g/l NH₃, 45,2 g/1 W und 50 Liter entionisiertem Wasser vorgelegt. Hierzu wurden unter Rühren 200kg APW-Dekahydrat gegeben. Anschließend wurde die Suspension drei Stunden bei 85°C unter Rühren behandelt. Die NH₃-Konzentration der flüssigen Phase betrug 3,5 g/l bei einem NH₃ : W-Stoffmengenverhältnis von 0,83 : 1. Der pH-Wert bei Raumtemperatur lag bei 6,9. Das Massenverhältnis zwischen Feststoff und wässeriger Lösung betrug 1,14 : 1. Nach der Behandlung wurde die Suspension filtriert, das Produkt mit 10 Liter VE-Wasser gewaschen und abschließend bei 100°C getrocknet. Die Produktmenge betrug 190 kg. Dies entsprach einer Ausbeute von 98,1 %.

In der unten stehenden Tabelle 1 sind die ermittelten Analysendaten des Produktes dargestellt. Ferner werden in dieser Tabelle die Analysendaten eines marktüblichen APW-Tetrahydrates angegeben.

### Ausführungsbeispiel 2:

In einen beheizbaren 200-Liter Rührreaktor wurden 215 Liter VE-Wasser vorgelegt. Hierzu wurden unter Rühren 200kg APW-Dekayhydrat gegeben. Anschließend wurde die Suspension zwei Stunden bei 90°C unter Rühren behandelt. Die NH₃-Konzentration der flüssigen Phase betrug 2,1 g/l bei einem NH₃ : W-Stoffmengenverhältnis von 0,77 : 1. Der pH-Wert bei Raumtemperatur lag bei 6,8. Das Massenverhältnis zwischen Feststoff und wässeriger Lösung betrug 0,80 : 1. Nach der Behandlung wurde die Suspension filtriert, das Produkt mit 10 Liter VE-Wasser gewaschen und abschließend bei 100°C getrocknet. Die Produktmenge betrug 184 kg. Dies entsprach einer Ausbeute von 95,3 %. In Tabelle 1 sind die ermittelten Analysendaten des Produktes dargestellt.

In Tabelle 2 sind Analysendaten von Produkten des Standes der Technik dargestellt. Ferner werden in dieser Tabelle die Analysendaten eines marktüblichen APW-Tetrahydrates angegeben.

**Tabelle 1: Analysendaten der erfindungsgemäß hergestellten Produkte sowie eines marktüblichen APW-Produktes**

| | | **Ausführungsbeispiel 1** | | **Ausführungsbeispiel 2** | | **Marktübliches Produkt** |
|---|---|---|---|---|---|---|
| | | APW-Dekahydrat ¹⁾ | APW -Tetrahydrat | APW-Dekahydrat ¹⁾ | APW-Tetrahydrat | APW-Tetrahydrat |
| Al | ppm | <3 | 0,06 | <3 | <0,05 | 2,9 |
| B | ppm | | <0,05 | | <0,05 | - |
| Ba | ppm | | <0,02 | | <0,02 | - |
| Bi | ppm | | <0,02 | | <0,02 | - |
| Ca | ppm | <3 | 0,22 | <3 | 0,12 | 2,5 |
| Cd | ppm | | <0,05 | | <0,05 | - |
| Co | ppm | | <0,02 | | <0,02 | - |
| Cr | ppm | <2 | 0,05 | <2 | 0,04 | 2,1 |
| Cu | ppm | | <0,02 | | <0,02 | - |
| Fe | ppm | <2 | 0,07 | <2 | 0,05 | 2 |
| Ge | ppm | | <0,2 | | <0,2 | - |
| K | ppm | <1 | 0,15 | <1 | 0,10 | 2 |
| Li | ppm | <1 | 0,03 | <1 | 0,01 | 3 |
| Mg | ppm | | <0,05 | | <0,05 | - |
| Mn | ppm | | <0,005 | | <0,005 | - |
| Mo | ppm | <3 | 0,52 | <3 | 0,30 | 4 |
| Na | ppm | <1 | 0,15 | < | 0,13 | 2 |
| Ni | ppm | | <0,02 | | <0,02 | - |
| P | ppm | <1 | 0,24 | <1 | 0,21 | 3,4 |
| Pb | ppm | | <0,02 | | <0,02 | - |
| Sb | ppm | | <0,15 | | <0,05 | - |
| Si | ppm | <2 | 0,3 | <2 | 0,3 | 3,1 |
| Sn | ppm | | 0,37 | | 0,32 | - |
| Sr | ppm | | <0,02 | | <0,02 | - |
| Te | ppm | | <0,05 | | <0,05 | - |
| Th | ppm | | <0,0004 | | <0,0004 | - |
| Ti | ppm | | <0,02 | | <0,02 | - |
| U | ppm | | <0,0004 | | <0,0004 | <1 |
| V | ppm | <1 | 0,031 | <1 | 0,022 | 2 |
| Zn | ppm | | <0,02 | | <0,02 | - |
| Zr | ppm | | <0,05 | | <0,05 | - |
| Reinheit | % | | >99,9998 | | >99,9997 | >99,99 |
| W | % | 68,63 | 70,45 | 68,69 | 70,44 | 70,38 |
| NH3 | % | 5,24 | 5,42 | 5,25 | 5,43 | 5,43 |

| | | | | | | |
|---|---|---|---|---|---|---|
| ¹⁾ APW-Dekahydrat, hergestellt nach Verfahren gemäß prioritätsgleicher Patentanmeldung STA 066009 | | | | | | |

**Tabelle 2: Analysendaten von Produkten des Standes der Technik**

| | | ^{1.)} | ^{2.)} | ^{3.)} | ^{4.)} | ^{5.)} | ^{6.)} | ^{7.)} |
|---|---|---|---|---|---|---|---|---|
| Al | ppm | 5 | 1 | 5 | 1 | 5 | 7 | 5 |
| As | ppm | 10 | 4 | 10 | 7 | 7 | 5 | 11 |
| Bi | ppm | 1 | 0,1 | - | - | 1 | 0,5 | <1 |
| Ca | ppm | 10 | 1 | 5 | 1 | 5 | 5 | 10 |
| Cd | ppm | - | - | 5 | - | 1 | - | <0,5 |
| Co | ppm | 10 | 1 | 10 | - | 5 | - | 1 |
| Cr | ppm | 10 | 1 | 10 | 1 | 5 | - | 7 |
| Cu | ppm | 3 | 0,1 | 5 | 1 | 1 | 1 | 5 |
| Fe | ppm | 10 | 3 | 10 | 1 | 10 | 6 | 12 |
| K | ppm | 10 | 10 | 10 | 2 | 9 | 7 | <10 |
| Mg | ppm | 7 | 1 | 5 | 1 | 5 | 7 | <1 |
| Mn | ppm | 10 | 1 | 5 | 1 | 5 | 1 | <0,5 |
| Mo | ppm | 20 | 7 | 30 | 6 | 20 | 14 | 27 |
| Na | ppm | 10 | 5 | 10 | 5 | 9 | 8 | <10 |
| Ni | ppm | 7 | 1 | 5 | 1 | 5 | - | 0,8 |
| P | ppm | 7 | 5 | 7 | 7 | 5 | 7 | 12 |
| Pb | ppm | 1 | 0,5 | 5 | - | 1 | 0,5 | 1 |
| S | ppm | 7 | 7 | 7 | - | 5 | - | 0,02 |
| Sb | ppm | 8 | 1 | - | - | 2 | - | 0,4 |
| Si | ppm | 10 | 3 | 10 | 1 | 8 | 6 | 8 |
| Sn | ppm | 1 | 0,3 | 10 | 1 | 1 | 0,5 | 4 |
| Ti | ppm | 10 | 3 | 10 | - | - | - | <1 |
| V | ppm | 10 | 3 | 10 | - | - | - | <1 |
| F | ppm | - | - | 25 | - | - | - | - |
| Li | ppm | - | - | 5 | - | - | - | - |
| Nb | ppm | - | - | 10 | - | - | - | <3 |
| Reinheit | % | 99,9823 | 99,9941 | 99,9776 | 99,9963 | 99,9885 | 99,9925 | >99,9868 |

| | | | | | | | | |
|---|---|---|---|---|---|---|---|---|
| 1.) Chinese National Standard GB 10116-88 2.) Excellent Chinese Grade (Hegdu Tungstend) 3.) Specification Wolfram Bergbau und Hüttengesellschaft m. b. H. 4.) Osram Sylvania 5.) Fujan Xiamen Tungsten Products Plant 6.) Chinese Production, Jiangxi Province 7.) Muster: Alloys Plant Kirovgrad, Rußland | | | | | | | | |

Die Angaben zu 1) - 6) stammen aus "TUNGSTEN Properties Chemistry, Technology of the Element, Alloys and Chemical Compound (ISBN 0-306-45053-4,1999), Lassner, Schubert, S. 210.

### Ausführungsbeispiel 3:

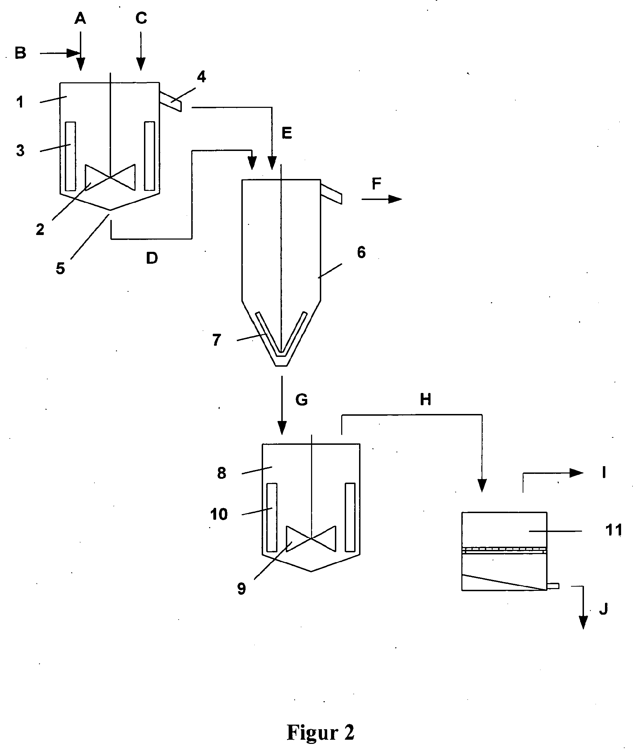

Dieses Beispiel zeigt anhand der in Figur 2 beschriebenen Vorrichtung die Herstellung von erfindungsgemäßem APW-Tetrahydrat. Das erfindungsgemäße Verfahren wird in einem Teil der in Figur 2 dargestellten Vorrichtung durchgeführt.

W-Konzentrat wurde mit Natronlauge bzw. Soda aufgeschlossen und die entstehende Lauge unter Zusatz von Mg-, Al-Salzen und Natriumhydrogensulfid von Verunreinigungen, wie P, As, Si, V und Mo, vorgereinigt. Als weiterer Reinigungsschritt von noch enthaltenen anionischen und kationischen Verunreinigungen wurde eine Flüssig-Flüssig-Extraktion unter Verwendung einer organischen Phase (7-10% Diisotridecylamin, 10% Isodecanol, Rest Testbenzin) durchgeführt. Die mit Wolfram beladene organische Phase ("OP") wurde mit NH₃-Lösung reextrahiert. Die dazu verwendete Vorrichtung ist in Figur 2 dargestellt.

In ein mit Rührer (2), Stromstörern (3) ausgestattetes Rührgefäß (1) (auch Behälter genannt) (Volumen: 250 l, Durchmesser: 600 mm, Schrägblattrührer: 6 Flügel, Durchmesser: 300 mm, 4 Stromstörer) wurden über Leitungen A, B und C kontinuierlich 400 l/h W-beladene OP und NH₃-Lösung in den Rührbereich dosiert. Über Leitung B wurde Wasser zugeführt, um die NH₃-Konzentration gezielt einzustellen. Die W-Konzentration der OP und die NH₃-Konzentration der NH₃-Lösung wurden inline automatisch gemessen. Die Dosierung der NH₃-Lösung wurde über das auf 0,90 festgelegte NH₃ : WStoffmengenverhältnis automatisch geregelt. Das OP / NH₃-Lösung-Dosierverhältnis wurde auf 15:1 eingestellt und über einen zusätzlichen Wasserstrom in die NH₃-Dosierleitung ebenfalls automatisch geregelt.

Der Volumenstrom der OP wurde fest eingestellt. Der Volumenstrom der NH₃-Lösung wurde in Abhängigkeit vom Volumenstrom der OP, der aktuell gemessenen W- und NH₃-Konzentrationen und dem eingestellten NH₃ : W-Stoffmengenverhältnis geregelt. Der H₂O-Volumenstrom wurde in Abhängigkeit vom Volumenstrom der NH₃-Lösung und dem Dosierverhältnis der Edukte geregelt. Die Temperatur im Behälter (1) wurde auf 48°C eingestellt und über die Temperierung der Eduktlösungen geregelt.

Die Überführung des im Behälter (1) entstandenen 3-Phasengemisches in den Settler (6) erfolgte aus dem Rührerbereich des Behälters über den Ablauf (5) und Leitung D sowie über den freien Überlauf (4) des Behälters und Leitung E. Das stationäre OP/AP-Verhältnis von 1/8 im Behälter (1), der Emulsionstyp "Öl in Wasser", die stationäre Feststoffkonzentration von 250 g/l wurde über die Rührerdrehzahl (210 upm), die Phasengemischentnahme aus dem unteren Behälterbereich (50 l/h) und die Rückführung von wäßriger Phase aus dem Settler (6) in den Behälter (1) (20 l/h) eingestelt. Die Verweilzeit der AP im Behälter (1) betrug 4,8 Stunden und der OP 4,2 Minuten. Das Phasengemisch wurde im mit Rührer (7) ausgestatteten Settler (6) (Volumen: 600 l, Durchmesser: 750 mm (Form: ab halber Höhe konisch zulaufend; ausgestattet mit Rührer des Typs wandläufiger Anker (schräg zulaufend)) aufgetrennt. Die Rührerdrehzahl des Settlers (6) wurde auf 15 upm eingestellt. Die entladene OP wurde über den Überlauf des Settlers über Leitung F abgetrennt, mit Wasser gewaschen und zur Beladungsstufe der Flüssig-Flüssig Extraktion zurückgeführt. Die Produktsuspension mit einem Feststoffgehalt von 1314 g/l wurde aus dem unteren Bereich des Settlers (6) über Leitung G in einen mit Rührer (9) und Stromstörern (10) ausgestatteten Zwischenbehälter (8) übergeführt, in dem das erfindungsgemäße Verfahren durchgeführt wurde. Dieser Zwischenbehälter (8) enthielt also eine wässerige Suspension von Ammoniumparawolframat-Dekahydratkristallen. Der Innenraum des Zwischenbehälters (8) war beheizt. Dieses führte zu einer Umwandlung des APW-Dekahydrates in das APW-Tetrahydrat. Dieses Produkt wurde als wässerige Kristallisatmischung über Leitung H in den Filter (11) übergeführt und das APW x 4 H₂O mit wenig Wasser gewaschen, um die Mutterlauge zu verdrängen. Das Produkt wurde über Leitung l aus dem Prozess ausgeschleust, abschließend bei 60°C getrocknet und charakterisiert.

Die Mutterlauge mit 35 g/l W und 7,0 g/l NH₃ wurde aus dem Filter (11) über Leitung J abgeführt und nach Abtrennung des NH₃ zur Aufschlußlösung der W-Konzentrate gegeben.

## Patentansprüche

1. Verfahren zur Herstellung von Ammoniumparawolframattetrahydrat mit einem Reinheitsgrad von mindestens 99,999%, **dadurch gekennzeichnet, dass** in wässeriger Phase suspendiertes Ammoniumparawolframatdekahydrat durch Erhitzen auf eine Temperatur von 85 bis 95 °C in Ammoniumparawolframattetrahydrat übergeführt wird.

2. Verfahren nach Anspruch 1, **dadurch gekennzeichnet, dass** in der entstandenen Mutterlauge eine NH₃-Konzentration zwischen 1,5 bis 12 g/l NH₃, bevorzugt 2,0 bis 4,0 g/l NH₃, vorliegt.

3. Verfahren nach einem der Ansprüche 1 bis 2, **dadurch gekennzeichnet, dass** in der entstandenen Mutterlauge ein NH₃ : W Stoffmengenverhältnis zwischen 0,5 bis 1,8, vorzugsweise 0,6 bis 1,0, vorliegt.

4. Verfahren nach einem der Ansprüche 1 bis 3, **dadurch gekennzeichnet, dass** das Massenverhältnis von Ammoniumparawolframatdekahydrat zu Mutterlauge so eingestellt wird, dass dieses zwischen 0,2 : 1 bis 2,5 : 1, bevorzugt zwischen 1 : 1 bis 1,8 : 1 beträgt.

5. Verfahren nach einem der Ansprüche 1 bis 4, **dadurch gekennzeichnet, dass** als suspendiertes Ammoniumparawolframatdekahydrat ein Produkt eingesetzt wird, das direkt durch Reextraktion einer mit Wolfram beladenen organischen Phase mit einer Ammoniak enthaltenden wässerigen Lösung in einer Mixer-Settler Vorrichtung hergestellt worden ist, wobei die Reextraktion bei einem NH₃ : W-Stoffmengenverhältnis von 0,83 bis 1,30, bevorzugt 0,85 bis 0,95, und bei einem Volumendosierverhältnis der mit Wolfram beladenen organischen Phase zur Ammoniak enthaltenden wässerigen Lösung von 5 bis 25, bevorzugt 10 bis 15, durchgeführt wurde.

6. Verfahren nach Anspruch 5, **dadurch gekennzeichnet, dass** die Re-extraktion im Mixer so durchgeführt wird, dass sich eine Feststoff-konzentration des Ammoniumparawolframathydrats, bezogen auf die Ammoniak enthaltende wässerige Phase im Mixer, von 100 bis 1200 g/l, bevorzugt 500 bis 800 g/l, einstellt.

7. Verfahren nach Anspruch 6, **dadurch gekennzeichnet, dass** im Mixer die Rührgeschwindigkeit so eingestellt wird, dass eine nicht homogene Verteilung von organischer Phase und Ammoniak enthaltender wässeriger Phase im Mixer erreicht wird.

8. Verfahren nach einem der Ansprüche 6 bis 7, **dadurch gekennzeichnet, dass** das Auftrennen des Phasengemisches in einem mit Rührvorrichtung ausgestattetem Settler unter Rühren erfolgt und dass die Drehzahl der Rührvorrichtung so eingestellt wird, dass bei der Sedimentation des Ammoniumparawolframathydrats mitgeschleppte organische Phase abgetrennt wird, wobei das Phasengemisch aus dem Mixer vorzugsweise in den Phasengrenzbereich zwischen organischer Phase und Ammoniak enthaltender wässeriger Phase des Settlers eingeleitet wird.

9. Verfahren nach einem der Ansprüche 1 bis 5, **dadurch gekennzeichnet, dass** als suspendiertes Ammoniumparawolframatdekahydrat ein Produkt eingesetzt wird, das zu mindestens 75 % aus Kristallen mit einer Länge von mindestens 200 µm besteht, die ein Verhältnis von Länge zu Breite von kleiner als 4,5 : 1 aufweisen, bevorzugt ein Produkt, das eine Schüttdichte von mindestens 1,7 g/cm³, vorzugsweise 1,8 bis 2,2 g/cm³, aufweist.

10. Verfahren nach Anspruch 9, **dadurch gekennzeichnet, dass** als suspendiertes Ammoniumparawolframatdekahydrat ein Produkt eingesetzt wird, das zu mindestens 75 % aus Kristallen mit einer Länge von 200 bis 1000 µm, vorzugsweise 300 bis 400 µm, besteht, die ein Verhältnis von Länge zu Breite von 3,0 : 1 bis 3,5 : 1 aufweisen.

11. Verfahren nach einem der Ansprüche 1 bis 10, **dadurch gekennzeichnet, dass** als wässerige Phase oder als Bestandteil der wässerigen Phase zur Suspendierung des Ammoniumparawolframatdekahydrates Ammoniak- und Wolfram-haltige Lösung und/oder entionisiertes Wasser eingesetzt wird, vorzugsweise die Mutterlauge und/oder das Waschwassser aus der Herstellung des Ammoniumparawolframattetrahydrates und/oder die Mutterlauge und/oder das Waschwassser aus der Herstellung des Ammoniumparawolframatdekahydrates.

## Claims

1. A process for preparing ammonium paratungstate tetrahydrate having a purity of at least 99.999%, **characterized in that** ammonium paratungstate decahydrate suspended in an aqueous phase is converted into ammonium paratungstate tetrahydrate by heating to a temperature from 85 to 95 °C.

2. The process according to claim 1, **characterized in that** an NH₃ concentration of from 1.5 to 12 g/l of NH₃, preferably from 2.0 to 4.0 g/l of NH₃, is present in the mother liquor formed.

3. The process according to either of claims 1 to 2, **characterized in that** an NH₃:W molar ratio of from 0.5 to 1.8, preferably from 0.6 to 1.0, is present in the mother liquor formed.

4. The process according to any of claims 1 to 3, **characterized in that** the mass ratio of ammonium paratungstate decahydrate to mother liquor is set in the range from 0.2:1 to 2.5:1, preferably from 1:1 to 1.8:1.

5. The process according to any of claims 1 to 4, **characterized in that** a product which has been prepared directly by re-extraction of a tungsten-laden organic phase with an ammonia-containing aqueous solution in a mixer-settler apparatus is employed as said suspended ammonium paratungstate decahydrate, where the re-extraction was carried out at an NH₃:W molar ratio of from 0.83 to 1.30, preferably from 0.85 to 0.95, and at a volume feed ratio of the tungsten-laden organic phase to the ammonia-containing aqueous solution of from 5 to 25, preferably from 10 to 15.

6. The process according to claim 5, **characterized in that** the re-extraction in the mixer is carried out in such a way that a solids concentration of the ammonium paratungstate hydrate, based on the ammonia-containing aqueous phase in the mixer, of from 100 to 1200 g/l, preferably from 500 to 800 g/l, is established.

7. The process according to claim 6, **characterized in that** the stirring speed in the mixer is set so that an inhomogeneous distribution of organic phase and ammonia-containing aqueous phase is achieved in the mixer.

8. The process according to either of claims 6 to 7, **characterized in that** the separation of the phase mixture is effected with stirring in a settler equipped with a stirring device and **in that** the rotational speed of the stirring device is set so that any organic phase entrained in the sedimentation of the ammonium paratungstate hydrate is separated off, with the phase mixture from the mixer being introduced into the phase boundary region between organic phase and ammonia-containing aqueous phase in the settler.

9. The process according to any of claims 1 to 5, **characterized in that** a product comprising at least 75% of crystals having a length of at least 200 µm and a ratio of length to width of less than 4.5:1, preferably a product having a bulk density of at least 1.7 g/cm³, preferably from 1.8 to 2.2 g/cm³, is employed as said suspended ammonium paratungstate decahydrate.

10. The process according to claim 9, **characterized in that** a product comprising at least 75% of crystals having a length of from 200 to 1000 µm, preferably from 300 to 400 µm, and a ratio of length to width of from 3.0:1 to 3.5:1, is employed as said suspended ammonium paratungstate decahydrate.

11. The process according to any of claims 1 to 10, **characterized in that** ammonia- and tungsten-containing solution and/or deionized water, preferably the mother liquor and/or the washing water from the preparation of the ammonium paratungstate tetrahydrate and/or the mother liquor and/or the washing water from the preparation of the ammonium paratungstate decahydrate, is used as aqueous phase or as constituent of the aqueous phase for suspending the ammonium paratungstate decahydrate.

## Revendications

1. Procédé pour la production de paratungstate d'ammonium tétrahydraté avec un degré de pureté d'au moins 99,999 %, **caractérisé en ce que** paratungstate d'ammonium décahydraté suspendu en phase aqueuse est converti en paratungstate d'ammonium tétrahydraté par chauffage à une température de 85 à 95 °C.

2. Procédé selon la revendication 1, **caractérisé en ce qu'**il y a une concentration de NH₃ comprise entre 1,5 et 12 g/l de NH₃, de préférence entre 2,0 et 4,0 g/l de NH₃, dans la liqueur mère formée.

3. Procédé selon l'une des revendications 1 ou 2, **caractérisé en ce qu'**il y a un rapport molaire de NH₃ à W compris entre 0,5 et 1,8, de préférence entre 0,6 et 1,0, dans la liqueur mère formée.

4. Procédé selon l'une quelconque des revendications 1 à 3, **caractérisé en ce que** le rapport massique de paratungstate d'ammonium décahydraté à la liqueur mère est établi pour être entre 0,2 : 1 et 2,5 : 1, de préférence entre 1 : 1 et 1,8 : 1.

5. Procédé selon l'une quelconque des revendications 1 à 4, **caractérisé en ce qu'**un produit qui a été préparé directement par réextraction d'une phase organique chargée de tungstène avec une solution aqueuse contenant de l'ammoniac dans un dispositif de mélangeur-décanteur est utilisé comme paratungstate d'ammonium décahydraté suspendu, dans lequel ladite réextraction a été effectuée à un rapport molaire de NH₃ à W de 0,83 à 1,30, de préférence de 0,85 à 0,95, et à un rapport de dosage volumique de ladite phase organique chargée de tungstène à ladite solution aqueuse contenant de l'ammoniac de 5 à 25, de préférence de 10 à 15.

6. Procédé selon la revendication 5, **caractérisé en ce que** ladite réextraction est effectuée dans un mélangeur de manière qu'une concentration de solides du paratungstate d'ammonium hydraté, par rapport à la phase aqueuse contenant de l'ammoniac dans le mélangeur de 100 à 1200 g/l, de préférence de 500 à 800 g/l, soit établie.

7. Procédé selon la revendication 6, **caractérisé en ce que** la vitesse de rotation dans le mélangeur est établie de manière qu'une distribution inhomogène de phase organique et phase aqueuse contenant de l'ammoniac dans le mélangeur soit atteinte.

8. Procédé selon l'une quelconque des revendications 6 à 7, **caractérisé en ce que** la séparation du mélange des phases est effectuée dans un décanteur équipé d'un dispositif d'agitation en agitant, et que la vitesse de rotation du dispositif d'agitation est établie de manière que de la phase organique entraînée pendant la sédimentation du paratungstate d'ammonium hydraté soit éliminée, dans lequel le mélange des phases provenant du mélangeur est de préférence introduit dans la région de la limite des phases entre la phase organique et la phase aqueuse contenant de l'ammoniac du décanteur.

9. Procédé selon l'une quelconque des revendications 1 à 5, **caractérisé en ce qu'**un produit consistant en au moins 75 % de cristaux ayant une longueur d'au moins 200 µm et présentant un rapport de longueur à largeur inférieur à 4,5 : 1, de préférence un produit présentant une densité apparente d'au moins 1,7 g/cm³, de préférence de 1,8 à 2,2 g/cm³, est utilisé comme paratungstate d'ammonium décahydraté suspendu.

10. Procédé selon la revendication 9, **caractérisé en ce qu'**un produit consistant en au moins 75 % de cristaux ayant une longueur de 200 à 1000 µm, de préférence de 300 à 400 µm, et présentant un rapport de longueur à largeur de 3,0 : 1 à 3,5 : 1 est utilisé comme paratungstate d'ammonium décahydraté suspendu.

11. Procédé selon l'une quelconque des revendications 1 à 10, **caractérisé en ce qu'**une solution contenant de l'ammoniac et du tungstène et/ou de l'eau déionisée, de préférence la liqueur mère et/ou l'eau de lavage provenant de la production du paratungstate d'ammonium tétrahydraté et/ou la liqueur mère et/ou l'eau de lavage provenant de la production du paratungstate d'ammonium décahydraté, est utilisée comme phase aqueuse ou comme constituant de la phase aqueuse pour suspendre le paratungstate d'ammonium décahydraté.
